(19) Europäisches Patentamt
European Patent Office
Office européen des brevets

(11) **EP 3 025 571 B1**

(12) **EUROPÄISCHE PATENTSCHRIFT**

(45) Veröffentlichungstag und Bekanntmachung des Hinweises auf die Patenterteilung:
**21.03.2018   Patentblatt 2018/12**

(51) Int Cl.:
*A01C 17/00* *(2006.01)*    *E01C 19/20* *(2006.01)*

(21) Anmeldenummer: **15401115.9**

(22) Anmeldetag: **11.11.2015**

(54) **SCHLEUDERSTREUER ZUM VERTEILEN VON STREUGUT**

CENTRIFUGAL SPREADER FOR DISTRIBUTION OF SPREAD MATERIAL

ÉPANDEUR CENTRIFUGE POUR SEL À ÉPANDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2014   DE 102014117376**

(43) Veröffentlichungstag der Anmeldung:
**01.06.2016   Patentblatt 2016/22**

(73) Patentinhaber: **Amazonen-Werke H. Dreyer GmbH & Co. KG 49205 Hasbergen (DE)**

(72) Erfinder:
• **Dreyer, Justus**
  **49076 Osnabrück (DE)**
• **Kleine-Hartlage, Hubertus**
  **49186 Bad Iburg (DE)**
• **Rahe, Florian**
  **49504 Lotte (DE)**
• **Teckemeyer, Stephan**
  **49504 Lotte (DE)**

(56) Entgegenhaltungen:
EP-A1- 0 963 690          EP-A1- 2 912 934
DE-A1- 4 417 549          DE-A1-102013 002 393
DE-U1-202012 002 455

EP 3 025 571 B1

**Beschreibung**

Die Erfindung betrifft einen Schleuderstreuer zum Verteilen von Streugut nach dem Oberbegriff des Anspruchs 1.

In der Landwirtschaft oder bei anderen Streufahrzeugen, beispielsweise im Winterdienst, werden zum Ausbringen von Streugut wie Dünger oder Streusalz Streuscheiben derart angetrieben, dass sie schnell rotieren und so Streugut, das von oben auf die Streuscheibe aufgebracht wird, abschleudern. Dabei ist es wünschenswert, eine möglichst vorhersagbare, insbesondere gleichmäßige, Verteilung des Streuguts zu erreichen. Um den Massenstrom und somit die Ausbringmenge zu bestimmen wurde schon vorgeschlagen, das Antriebsdrehmoment der Streuscheiben zu messen.

Der Zusammenhang zwischen dem Antriebsdrehmoment und dem Streugutmassenstrom hängt von verschiedenen Einstellparametern wie z.B. der eingesetzten Schleuderscheiben, der Drehzahl der Scheiben, dem Wirkradius der Streuschaufeln, dem Abstand des Streugutaufgabebereichs zur Streuscheibendrehachse und der Art und Anordnung der Streuschaufeln auf der Streuscheibe ab. Daher kann mit dem gemessenen Drehmoment im Streubetrieb alleine noch keine Aussage oder nur eine ungenaue Aussage über den tatsächlichen Massenstrom getroffen werden. Die oben genannten Parameter müssen bei der Bestimmung mit einbezogen werden.

Dazu ist es beispielsweise aus der EP 0 963 690 bekannt, eine Vielzahl von Betriebskennlinien für die verschiedenen, einzelnen Einstellparameter in einem Rechner des Schleuderstreuers zu hinterlegen, um die korrekten Zusammenhänge zwischen Drehmoment und Massenstrom für den jeweiligen Betriebszustand herstellen zu können. Werden also beispielsweise für verschiedene Streubreiten teleskopierbare Streuschaufeln mit änderbarerem Wirkradius verwendet, wird für jede Schaufelstellung und jede Kombination bei mehreren Schaufeln pro Scheibe eine Betriebskennlinie vorab gemessen und im Rechner des Schleuderstreuers abgespeichert. Nachteilig ist daran, dass eine Vielzahl von Betriebskennlinien vorab ermittelt und abgespeichert werden müssen, dass aber trotzdem nicht immer alle möglichen Ausbring-/Einstellvarianten abgedeckt werden können, so dass man für bestimmte Einstellparameter, für die keine geeignete Betriebskennlinie abgespeichert ist, mit einem Kompromiss arbeitet und eine den Betriebszustand lediglich annähernde, aber eben nicht optimal wiedergebende Betriebskennlinie verwenden muss.

Außerdem kann es in der Entwicklung von landtechnischen Arbeitsmaschinen vorkommen, dass Komponenten eines bereits an den Kunden ausgelieferten Schleuderstreuers verbessert werden. Möchte der Kunde diese Verbesserung nutzen, muss die neu entwickelte Komponente entweder nachgerüstet oder ausgetauscht werden. Wird beispielsweise eine verbesserte Streuscheibe entwickelt, die der Kunde an einem älteren Schleuderstreuer nutzen will, müssten nun neben dem Austausch der Streuscheiben diverse Betriebskennlinien für die neue Streuscheibe auf den Rechner des Schleuderstreuers aufgespielt werden. Die DE 20 2012 002455 U1 offenbart einen Schleuderstreuer und ein Verfahren nach den Oberbegriffen der Ansprüche 1 und 6.

Daher ist es eine Aufgabe der Erfindung, einen Schleuderstreuer bereitzustellen, bei dem der Streugutmassenstrom bei verschiedenen Betriebszuständen mit geringem Vorbereitungs- und Speicheraufwand präzise geregelt werden kann.

Diese Aufgabe wird dadurch gelöst, dass im Rechner eine von den Einstellparametern abhängige Basiskennlinie für den Massenstrom hinterlegt ist, dass eine Eingabevorrichtung zum Eingeben von Parameterwerten in den Rechner durch einen Benutzer vorgesehen ist, über die ein oder mehrere der zu dem jeweiligen Betriebszustand gehörenden Parameterwerte eingegeben werden, und dass der Rechner nach dem Eingeben der Parameterwerte aus der Basiskennlinie die Betriebskennlinie berechnet, mit der der Ist-Massenstrom für das Regeln berechnet wird, wobei erfindungsgemäß das Berechnen der Betriebskennlinie erfolgt, indem die Basiskennlinie anhand einer hinterlegten Rechenvorschrift, in welche Parameterwerte als Parameter eingehen, modifiziert wird und wobei die Rechenvorschrift nicht ausschließlich empirisch, sondern teilweise rechnerisch ermittelt ist. Es ergibt sich daraus also der Vorteil, dass nicht viele verschiedene Betriebskennlinien für verschiedene Betriebszustände auf dem Rechner des Schleuderstreuers, wie in der EP 0 963 690 vorgeschlagen, hinterlegt werden müssen, um in den Betriebszuständen eine präzise Zuordnung von gemessenem Drehmoment zu Ist-Massenstrom zu ermöglichen, sondern dass aus einer einzigen abgespeicherten Basiskennlinie eine den jeweiligen Betriebszustand genau berücksichtigende Betriebskennlinie errechnet und dann verwendet wird. Für jeden neuen Betriebszustand wird die Betriebskennlinie also immer neu berechnet.

Die Betriebskennlinie kann einen, insbesondere rechnerischen, Zusammenhang zwischen dem gemessenen Drehmoment und dem Ist-Massenstrom in dem eingestellten bzw. ausgewählten Betriebszustand definieren.

Die Einstellparameter können beispielsweise die Fahrtgeschwindigkeit, die Korngröße des Streuguts, die Drehgeschwindigkeit, die Art der Streuscheibe, beispielsweise Normalstreuscheibe, Grenzstreuscheibe o.Ä., das Trägheitsmoment der Streuscheiben, die Arbeitsbreite, die Soll-Streugutmenge pro Fläche sein. Diese können dann numerisch vom Benutzer eingegeben werden. Es ist jedoch auch möglich, dass die Benutzereingabe eine Umschreibung des Betriebszustandes ist (beispielsweise "Grenzstreuscheibe") und dass im Rechner entsprechende Zahlenwerte hinterlegt sind, die dann die eigentlichen Parameterwerte sind. Der Einfachheit halber wird letzterer Fall jedoch auch als "Eingeben von Parameterwerten" umschrieben, auch wenn es sich nur um eine mittelbare Eingabe von Zahlenwerten handelt.

Das Berechnen der Betriebskennlinie erfolgt, indem die Basiskennlinie anhand einer hinterlegten Rechenvorschrift, in welche Parameterwerte als Parameter eingehen, modifiziert wird.

Im Gegensatz zum Stand der Technik wird aus genau einer Basiskennlinie also genau eine Betriebskennlinie ermittelt, indem die Parameterwerte in die Rechenvorschrift eingesetzt werden, sodass aus einer Basiskennlinie rechnerisch eine beliebige Betriebskennlinie für jeden einer Vielzahl von Betriebszuständen bestimmt werden kann. Im Stand der Technik müssen hingegen alle Betriebskennlinien durch Messungen bestimmt und gespeichert werden. Bevorzugt sind im Rechner gleichzeitig jeweils nur die Basiskennlinie und höchstens zwei, bevorzugt genau eine, Betriebskennlinie gespeichert.

Konkreter wird im Rechner eine Basiskennlinie bzw. eine Formel hinterlegt, in die verschiedene Parameter einfließen, beispielsweise die Drehzahl, der Wirkradius der Streuschaufeln, der Abstand des Streugutaufgabebereichs zur Streuscheibendrehachse und die Anordnung der Streuschaufeln auf der Streuscheibe. In diese Formel werden die Werte der Einstellparameter des aktuellen Betriebszustands eingesetzt und so eine neue Formel erhalten.

Zum Beispiel gibt der Bediener die von ihm eingestellten Schaufellängen in den Rechner ein, wodurch die Basiskennlinie basierend auf der hinterlegten Berechnungsvorschrift derart modifiziert wird, dass der Zusammenhang zwischen Drehmoment und Massenstrom nun für die eingestellte Schaufellänge gilt. Dieser Zusammenhang wird durch die Betriebskennlinie beschrieben, anhand derer dann im Betrieb der Massenstrom indirekt über das Drehmoment bestimmt werden kann. Es müssen jedoch nicht alle Parameterwerte vom Benutzer eingegeben werden, sondern können von geeigneten Sensoren gemessen werden. Beispielsweise kann die Drehzahl der Drehscheibe anhand von Drehzahlmessern bestimmt werden.

Die Rechenvorschrift ist erfindungsgemäß nicht ausschließlich empirisch, sondern teilweise rechnerisch ermittelt. Die Rechenvorschrift kann insbesondere durch Zusammenfassen mehrerer empirisch bestimmter Rechenvorschriften zu einer einzigen Rechenvorschrift, beispielsweise durch anteilige Multiplikation erhalten werden.

Die Rechenvorschrift kann beispielsweise ermittelt werden, indem der Wert mehrerer Parameter festgehalten wird und verschiedene bekannte Massenströme auf die Streuscheibe aufgegeben werden und das erforderliche Antriebsdrehmoment gemessen wird. Aus den Werten wird eine erste Gleichung abgeleitet. Danach wird jeweils der Massenstrom und alle bis auf einen Parameter bei einem festen Wert gehalten und das Antriebsdrehmoment wird bei verschiedenen Werten des einen Parameters gemessen. Daraus kann eine zweite Gleichung abgeleitet werden. Dies wird für alle Parameter durchgeführt. Beispielsweise können nacheinander der Massenstrom, die Drehzahl und der Wirkradius variiert werden. So ergeben sich drei Gleichungen. Daraus kann eine Rechenvorschrift für den Massenstrom in Abhängigkeit von der Drehzahl, dem Wirkradius und dem Antriebsdrehmoment erhalten werden. Aus den Gleichungen kann eine allgemeine Rechenvorschrift für den Massenstrom in Abhängigkeit von dem Drehmoment und den Einstellparametern bestimmt werden. Beispielsweise kann diese Rechenvorschrift durch anteilige Multiplikation der einzelnen Gleichungen erhalten werden.

Bei der oben genannten Bestimmungsmethode der Rechenvorschrift ist zu beachten, dass sich die einzelnen Gleichungen typischerweise durch ein "Fitting-Verfahren" ergeben, also ein Verfahren, bei dem, meist rechnergestützt, eine Funktion ermittelt wird, die die gemessenen Werte bis auf möglichst kleine Abweichungen wiedergibt. Dafür werden nach Möglichkeit Funktionen mit wenigen Parametern gewählt und vorzugsweise solche, die angesichts physikalischer Modelle plausibel erscheinen.

Die Rechenvorschrift kann eine stetige Funktion darstellen, sodass selbst für beliebig kleine Änderungen der Parameterwerte keine sprunghafte Änderung der Werte der Regelkurve auftritt. Dies hat den Vorteil, dass kleine Änderungen der einzustellenden Parameter auch zu beliebig kleinen Änderungen des Funktionswertes, also des ausgegebenen Massenstroms führen. Würde man mit einzelnen Betriebskennlinien oder Tabellenwerten arbeiten, würde immer die nächstliegende Betriebskennlinie, bzw. der nächstliegende Tabellenwert genutzt, der aber bei einer Einstellung von Zwischenwerten nicht exakt ist.

Das Einstellen des Schleuderstreuers auf verschiedene Betriebszustände kann ein Verstellen und/oder Verändern der Schaufellänge oder der Schaufelstellung, Verändern des Aufbringbereichs von Streugut auf die Streuscheibe, Verändern der Drehzahl, Einsetzen von anderem Streugut und/oder Austauschen einer oder mehrerer Streuscheiben umfassen.

Der Schleuderstreuer kann eine Anzeigevorrichtung umfassen, die dem Benutzer anzeigt, welche Parameterwerte eingegeben werden müssen und welche Parameterwerte bereits gesetzt sind. Außerdem kann eine Warnvorrichtung vorgesehen sein, die eine Warnung ausgibt, wenn Parameterwerte eingegeben werden, die außerhalb eines zulässigen Bereiches liegen und/oder wenn eine Kombination der Parameterwerte eine nichtzulässige Kombination ist und/oder wenn benötigte Parameterwerte fehlen. Welche Parameterwerte benötigt werden und/oder welche Parameterwerte und Kombinationen zulässig sind, kann auf dem Rechner hinterlegt sein. Wenn benötigte Parameterwerte nicht eingegeben werden, kann alternativ oder zusätzlich automatisch ein hinterlegter Standardwert gesetzt werden und dem Benutzer ein entsprechender Hinweis gegeben werden. Die im Zusammenhang mit der Vorrichtung beschriebenen Merkmale und Vorteile gelten auch für das Verfahren und werden im Folgenden nicht ausführlich wiederholt.

Das Verfahren zum Verteilen von Streugut umfasst ein rotierendes Antreiben mindestens einer Streuscheibe nach dem Oberbegriff des Anspruchs 8, wobei in dem Rechner eine von den Einstellparametern abhängige Basiskennlinie für den Massenstrom hinterlegt ist, ein Benutzer einen oder mehrere der zu dem jeweiligen Betriebszustand gehörenden Parameterwerte in einen Rechner eingibt und der Rechner nach dem Eingeben der Parameterwerte aus der Basiskennlinie die Betriebskennlinie berechnet, mit der der Ist-Massenstrom für das Regeln berechnet wird, wobei das Berechnen der Betriebskennlinie erfolgt, indem die Basiskennlinie anhand einer hinterlegten Rechenvorschrift, in welche Parameterwerte als Parameter eingehen, modifiziert wird und wobei erfindungsgemäß die Rechenvorschrift nicht ausschließlich empirisch, sondern teilweise rechnerisch ermittelt ist. Insbesondere kann die Betriebskennlinie einen Zusammenhang zwischen dem gemessenen Drehmoment und dem Ist-Massenstrom in dem eingestellten Betriebszustand definieren. Die berechnete Betriebskennlinie kann nach Beenden des Betriebs unmittelbar gelöscht oder so lange gespeichert und zur Berechnung des Ist-Massenstroms genutzt werden, bis neue Einstellparameter eingegeben werden und eine neue Betriebskennlinie berechnet wird.

Das Berechnen der Betriebskennlinie erfolgt, indem die Basiskennlinie anhand einer hinterlegten Rechenvorschrift, in welche die Parameterwerte als Parameter eingehen, modifiziert wird. Die Rechenvorschrift ist erfindungsgemäß nicht ausschließlich empirisch, sondern teilweise rechnerisch ermittelt. Insbesondere kann die Rechenvorschrift durch Zusammenfassen mehrerer empirisch bestimmter Rechenvorschriften zu einer einzigen Rechenvorschrift, beispielsweise durch anteilige Multiplikation, erhalten werden. Die Rechenvorschrift kann eine stetige Funktion darstellen, sodass selbst für beliebig kleine Änderungen der eingegebenen Parameterwerte keine sprunghafte Änderung der Werte der Regelkurve auftritt.

Das Einstellen des Schleuderstreuers auf verschiedene Betriebszustände kann Verstellen und/oder Verändern der Schaufellänge oder der Schaufelstellung, Verändern des Aufbringbereichs von Streugut auf die Streuscheibe, Verändern der Drehzahl, Einsetzen von anderem Streugut und/oder Austauschen einer oder mehrerer Streuscheiben und/oder Wurfschaufeln umfassen.

Das Verfahren kann insbesondere mit einer der oben beschriebenen Vorrichtungen ausgeführt werden.

Weitere Merkmale und Vorteile werden nachfolgend anhand der beispielhaften Figuren erläutert. Dabei zeigt:

Fig. 1      eine schematische, nicht maßstabsgetreue Darstellung eines Schleuderstreuers, angehängt an einen Ackerschlepper, in Seitenansicht,

Fig. 2      eine schematische, nicht maßstabsgetreue Darstellung eines Schleuderstreuers in einer Ansicht von hinten und

Fig. 3 - 7   beispielhafte Funktionen zum Bestimmen der Basiskennlinie und von Betriebskennlinien.

Die folgenden Ausführungsbeispiele werden jeweils bezogen auf einen Schleuderstreuer beschrieben, der körnigen Trockendünger mittels zweier Streuscheiben verteilt. Es kann sich jedoch auch um andere Arten von Schleuderstreuern, beispielsweise um Streumaschinen im Winterdienst, handeln.

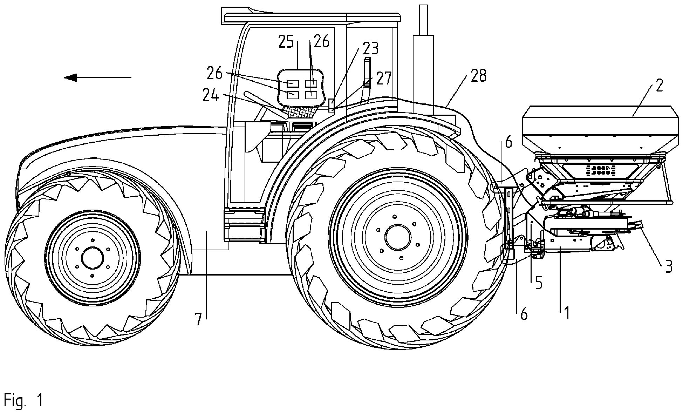

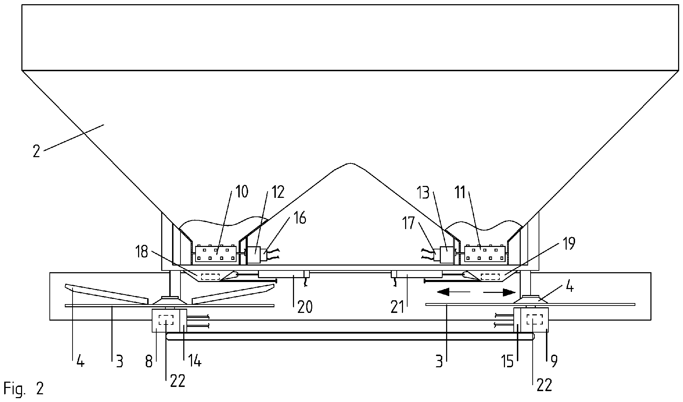

Figuren 1 und 2 zeigen verschiedene Ansichten des Schleuderstreuers. Der Schleuderstreuer weist den Rahmen 1, den Vorratsbehälter 2 sowie die Streuscheiben 3 mit den Wurfschaufeln 4 auf. Zum Anhängen an den Ackerschlepper 7 sind beispielsweise auf der Vorderseite des Rahmens 1 Dreipunktkupplungselemente 5 angeordnet, über welche der Schleuderstreuer an einen Dreipunktkraftheber 6 eines Ackerschleppers 7 anzuordnen ist. Alternativ können andere Aufhängungen vorgesehen sein. Als Antriebe, die die Streuscheiben rotierend antreiben, werden hier beispielsweise Hydraulikmotoren 8 und 9 verwendet. Andere Antriebe wie Elektromotoren oder mechanische Antriebsübertragungen sind jedoch ebenfalls denkbar. In den unteren Teilen des Vorratsbehälters sind die als Nockenwalzen 10 und 11 ausgebildeten Dosiervorrichtungen angeordnet. Es können jedoch auch andere Dosiervorrichtungen verwendet werden. Die Nockenwalze 10 wird hier von Hydraulikmotor 12 angetrieben und die Nockenwalze 11 von Hydraulikmotor 13. Auch die Hydraulikmotoren 12 und 13 können durch andere Antriebe, beispielsweise Elektromotoren ersetzt werden. Die Hydraulikmotoren 8, 9, 12 und 13 können über Leitungen an die Hydraulikanlage des Schleppers angeschlossen werden. An den Hydraulikmotoren sind elektronisch ansteuerbare Ventile 14, 15, 16 und 17 angeordnet, mit denen sich die Drehzahlen der Hydraulikmotoren einstellen lassen. Unterhalb der Dosiervorrichtungen 10 und 11 sind die Auslaufrutschen 18 und 19 angeordnet. Die Auslaufrutschen sind hier über die als Elektromotoren ausgebildeten Einstellvorrichtung 20 und 21 zu verschieben, so dass sich hierdurch der Abgabebereich bzw. die Abgabefläche des von den Dosiervorrichtungen aus dem Vorratsbehälter dosierten Streuguts auf die jeweilige Streuscheibe einstellen bzw. verändern lässt. Alternativ oder zusätzlich kann mittels einer hier nicht gezeigten Einstellvorrichtung der Wirkradius der Streuschaufeln eingestellt werden, indem die Schaufellänge verstellt wird.

Pro Streuscheibe ist ein Drehmomentsensor 22 zum Messen des Drehmoments des jeweiligen Antriebs angeordnet, hier zum Beispiel ein magnetischer Drehmomentsensor. Beispielsweise kann der Drehmomentsensor an einer Antriebswelle der Streuscheiben angeordnet sein. In der Figur ist der Drehmomentsensor gestrichelt angedeutet, da er im Inneren eines Gehäuses des jeweiligen Antriebs angeordnet ist. Andere Arten und Anordnungen von Drehmomentsensoren sind ebenfalls denkbar.

Zudem zeigt Figur 1 den Rechner 23, an den hier eine Eingabevorrichtung 24 in Form einer Tastatur angeschlossen ist. Zudem ist hier eine Anzeigevorrichtung 25 an den Rechner angeschlossen, die eine Benutzeroberfläche anzeigt, die dem Benutzer ermöglicht, mit der Tastatur geeignete Werte für die Parameter in entsprechende Felder 26 einzugeben. Dem Benutzer kann beispielsweise angezeigt werden, welche Werte schon gesetzt sind und welche Werte noch eingegeben werden müssen. Optional kann der Rechner auch eine Tonausgabe umfassen, die einen Warnton ausgibt, wenn der Benutzer unzulässige Werte eingibt oder wenn Werte fehlen, wenn der Benutzer den Betrieb aufnehmen will.

Die Regeleinrichtung 27 ist hier in den Rechner integriert. Sie kann alternativ auch außerhalb des Rechners angeordnet und über eine Datenverbindung kontaktlos oder kontaktbehaftet mit dem Rechner verbunden sein. Die Regeleinrichtung ist mit den ansteuerbaren Ventilen, also indirekt mit der Dosiervorrichtung und mit dem Drehmomentsensor, jeweils über eine Datenverbindung verbunden. Im hier gezeigten Beispiel ist die Datenverbindung kontaktbehaftet, also mit einem oder mehreren Kabeln 28, ausgebildet. Sie kann jedoch auch kontaktlos, beispielsweise als Bluetooth-Verbindung oder WLAN-Verbindung, ausgebildet sein. Welche Art der Datenverbindung vorteilhaft ist, hängt unter anderem von der Anordnung der Regeleinrichtung ab.

Ein Verfahren zum Verteilen von Streugut wird anhand des oben beschriebenen Schleuderstreuers beschrieben, kann jedoch auch mit einem anderen Schleuderstreuer erfolgen.

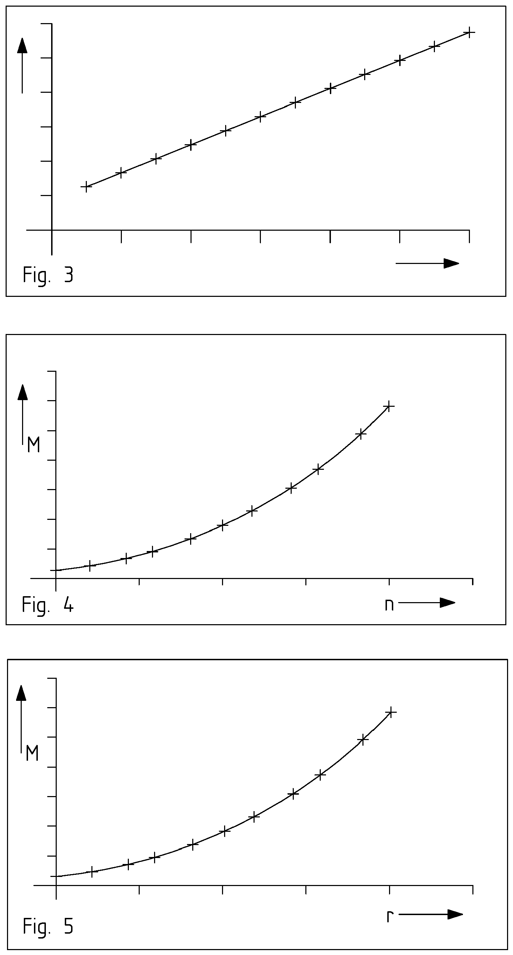

Bevor der Schleuderstreuer in Betrieb genommen wird, wird die Basiskennlinie bestimmt, wie im Folgenden anhand der Figuren 3 bis 7 erläutert wird.

Die Basiskennlinie wird durch eine Funktion definiert, die eine allgemeine Abhängigkeit zwischen Massestrom und Drehmoment beschreibt und die Einstellparameter enthält. Um die Betriebskennlinie zu erhalten, werden in diese Funktion die Parameterwerte eingesetzt. Das Einsetzen der Parameterwerte kann die Basiskennlinie beispielsweise verschieben, stauchen, strecken und/oder ihre Steigung ändern.

Anhand der Figuren 3 bis 5 wird im Folgenden beschrieben, wie die Basiskennlinie erhalten wird. Beispielhaft sind hier die Drehzahl und der Wirkradius der Streuscheiben einstellbar.

Zunächst wird ein Wirkradius $c_r$ und eine Drehzahl $c_n$ konstant eingestellt. Nun werden verschiedene bekannte Massenströme $\dot{m}$ auf die Streuscheibe abgegeben und das erforderliche Antriebsdrehmoment $M_{c_r,c_n}$ gemessen. Der Zusammenhang der gewonnenen Wertepaare lässt sich anschließend mathematisch bestimmen oder zumindest annähern, zum Bespiel könnte ein linearer Zusammenhang bestehen:

$$M_{c_r,c_n}(\dot{m}) = c_1\dot{m} + c_2 \qquad\qquad \text{Gl. 1}$$

$$\dot{m}_{c_r,c_n}(M) = \frac{M - c_2}{c_1} \qquad\qquad \text{Gl. 2}$$

Danach wird ein Massenstrom $c_{\dot{m}}$ und ein Wirkradius $c_r$ fest eingestellt und das Antriebsmoment $M_{c_r,c_{\dot{m}}}$ bei verschiedenen Drehzahlen n gemessen. Es könnte sich beispielsweise ein Zusammenhang ergeben, der durch ein Polynom ausgedrückt werden kann:

$$M_{c_r,c_{\dot{m}}}(n) = c_3 n^2 + c_4 n + c_5 \qquad\qquad \text{Gl. 3}$$

Danach wird eine Drehzahl $c_n$ und ein Massenstrom $c_{\dot{m}}$ konstant eingestellt und die Antriebsmomente $M_{c_n,c_{\dot{m}}}$ bei verschiedenen Radien r ermittelt. Als Beispiel könnte sich daraus folgender Zusammenhang ergeben:

$$M_{c_n,c_{\dot{m}}}(r) = c_6 r^2 + c_7 r + c_8 \qquad\qquad \text{Gl. 4}$$

Um nun aus den gewonnenen Gleichungen eine Funktion $\dot{m} = f(M,n,r)$ zu erhalten, werden diese durch eine anteilige Multiplikation miteinander verknüpft:

$$\dot{m}(M,n,r) = \dot{m}_{c_r,c_n}(M) \cdot \frac{M_{c_r,c_n}(\dot{m} = c_{\dot{m}})}{M_{c_r,c_{\dot{m}}}(n)} \cdot \frac{M_{c_r,c_n}(\dot{m} = c_{\dot{m}})}{M_{c_n,c_{\dot{m}}}(r)} \qquad\qquad \text{Gl. 5}$$

$$\dot{m}(M, n, r) = \dot{m}_{c_r, c_n}(M) \cdot \frac{M_{c_r, c_n}(\dot{m} = c_{\dot{m}})^2}{M_{c_r, c_{\dot{m}}}(n) \cdot M_{c_n, c_{\dot{m}}}(r)} \qquad \text{Gl. 6}$$

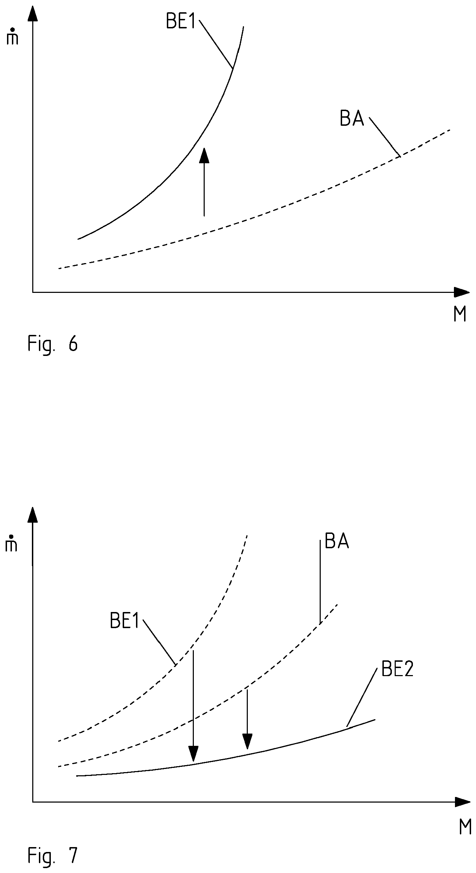

Der Massenstrom $\dot{m}$ hängt in diesem Beispiel vom Drehmoment $M$, vom Radius $r$ und von der Drehzahl $n$ und den Konstanten $c_1 \dots c_8$ ab. Gleichung 6 repräsentiert mathematisch die Basiskennlinie und wird im Rechner des Schleuderstreuers gespeichert. Eine beispielhafte Basiskennlinie BA ist in Figur 6 gestrichelt dargestellt. Die Basiskennlinie hängt ja von verschiedenen Betriebsparametern ab, in die erst später Werte eingesetzt werden, daher wurden hier beispielhaft für die graphische Darstellung alle Konstanten gleich 1 gesetzt.

Es müssen zwar vorab im Werk des Herstellers Kennlinien ermittelt werden, jedoch wesentlich weniger als im Stand der Technik, und sie werden nicht als Betriebskennlinien im Rechner des Schleuderstreuers hinterlegt, sondern nur zur einmaligen Bestimmung der Basiskennlinie verwendet und können dann verworfen werden.

Sind weitere Einstellmittel am Schleuderstreuer vorhanden, kann das oben aufgeführte Verfahren beliebig für weitere Parameter erweitert werden.

Die eingegebenen Parameterwerte müssen für die Variablen (n, r) eingesetzt werden.

Bevor der Benutzer den Betrieb des Schleuderstreuers aufnimmt, ändert er mittels der Einstellvorrichtung den Betriebszustand. In diesem Fall wird mit einem Stellmotor die Schaufellänge der Streuscheiben verstellt. Das verändert den Wirkradius der Streuscheiben. Alternativ oder zusätzlich kann beispielsweise der Abgabebereich des Streuguts verstellt werden, indem die Auslaufrutschen mit den Elektromotoren verstellt und/oder verändert werden, wobei dann beispielsweise die Position der Streuscheiben als Parameterwert eingegeben werden könnte. Eine weitere typische Alternative ist, dass die Streuscheibenart geändert wird, beispielsweise durch einen Wechsel von einer Normalstreuscheibe zu einer Grenzstreuscheibe oder zu einer Streuscheibe mit einem anderen Arbeits- und/oder Wurfweitenbereich

Bevor die Streuscheiben in Betrieb genommen werden, gibt der Benutzer mit der Eingabevorrichtung den bzw. die neuen Parameterwert(e) für den eingestellten Betriebszustand ein, zum Beispiel die neue Schaufellänge. Alle anderen Felder können dabei bereits mit den zuvor verwendeten Parameterwerten, beispielsweise der Drehzahl und der Streugutart, oder mit Standardwerten vorausgefüllt sein oder der Benutzer kann sie neu eingeben.

Der Benutzer bestätigt die Eingabe, bevor die Streuscheiben in Betrieb genommen werden. In diesem Beispiel wird ein Warnton ausgegeben, wenn ein unzulässiger Wert eingegeben wird oder ein benötigter Wert nicht angegeben wurde und bricht den Bestätigungsvorgang ab. Beispiele für unzulässige Werte sind Buchstaben in reinen Zahlenfeldern oder Zahlenwerte, die nicht in einem vorgegebenen Intervall liegen. Beispielsweise kann so vermieden werden, dass Werte zugrunde gelegt werden, die um Größenordnungen von typischen Werten abweichen und zu Störungen im Betrieb führen würden.

Wenn der Bestätigungsvorgang abgeschlossen ist, werden die eingegebenen Parameterwerte (oder, wenn eine Beschreibung in das Feld eingegeben wird, der Beschreibung zugeordnete numerische Werte) für die Variablen (z.B. r) in Gleichung 6 eingesetzt. Das heißt, die Basiskennlinie wird so modifiziert, dass die Betriebskennlinie BE1 für den eingestellten Betriebszustand erhalten wird. Jedem gemessenen Drehmomentwert kann nun durch die Betriebskennlinie exakt ein Massenstromwert zugeordnet werden. Die Betriebskennlinie ist in diesem Fall stetig.

Nun werden die Streuscheiben in Betrieb genommen. Die Streuscheiben werden von den jeweiligen Antrieben mit einer bestimmten Drehzahl rotiert, indem die zu den Hydraulikmotoren 8 und 9 gehörenden Ventile 14 und 15 entsprechend eingestellt werden, und auf die rotierenden Streuscheiben wird über die Auslaufrutschen Streugut gegeben, welches von den rotierenden Streuscheiben, geleitet durch die Streuschaufeln, radial nach außen beschleunigt und so verteilt wird. Zum Antreiben der Streuscheiben ist ein Antriebsdrehmoment nötig, das mit dem Drehmomentsensor gemessen wird. Der Wert für das Drehmoment wird vom Drehmomentsensor an die Regeleinrichtung gesendet.

Aus dem gemessenen Drehmoment wird ein Ist-Massenstrom bestimmt. In der Regeleinrichtung wird dann durch einen Vergleich bestimmt, ob der Ist-Massenstrom einem Soll-Massenstrom entspricht. Wenn dies nicht der Fall ist, regelt die Regeleinrichtung die Dosiervorrichtung derart, dass der Massenstrom in die gewünschte Richtung korrigiert wird, bis der Ist-Massenstrom dem Soll-Massenstrom entspricht. Im oben genannten Beispiel werden also die Ventile 16 und 17 der Hydraulikmotoren 12 und 13, die die Nockenwalzen 11 und 12 antreiben, geregelt. Für die Bestimmung des Ist-Massenstroms aus dem gemessenen Drehmoment wird die Betriebskennlinie verwendet, die den Zusammenhang zwischen dem Ist-Massestrom und dem gemessenen Drehmoment in dem aktuellen Betriebszustand wiedergibt und aus der für jeden Drehmomentwert ein Massenstromwert berechnet wird.

Die Betriebskennlinie BE1 kann auch nach Beenden des Betriebs als Einstellung hinterlegt bleiben. Wenn der Betrieb wieder aufgenommen wird und der Betriebszustand unverändert bleibt, kann die Betriebskennlinie BE1 weiter verwendet werden. Wenn der Betriebszustand geändert wird, kann entweder durch Ersetzen einzelner Parameterwerte in der Betriebskennlinie BE1 oder durch die gewünschte Richtung korrigiert wird, bis der Ist-Massenstrom dem Soll-Massenstrom entspricht. Im oben genannten Beispiel werden also die Ventile 16 und 17 der Hydraulikmotoren 12 und 13, die die Nockenwalzen 11 und 12 antreiben, geregelt. Für die Bestimmung des Ist-Massenstroms aus dem gemessenen Drehmoment wird die Betriebskennlinie verwendet, die den Zusammenhang zwischen dem Ist-Massestrom und dem gemessenen Drehmoment in dem aktuellen Betriebszustand wiedergibt und aus der für jeden Drehmomentwert ein Massenstromwert berechnet wird.

Die Betriebskennlinie BE1 kann auch nach Beenden des Betriebs als Einstellung hinterlegt bleiben. Wenn der Betrieb wieder aufgenommen wird und der Betriebszustand unverändert bleibt, kann die Betriebskennlinie BE1 weiter verwendet werden. Wenn der Betriebszustand geändert wird, kann entweder durch Ersetzen einzelner Parameterwerte in der Betriebskennlinie BE1 oder durch eingeben neuer Parameterwerte in die Basiskennlinie BA eine neue Betriebskennlinie BE2, die dem neuen Betriebszustand zugeordnet ist, berechnet werden, wie in Figur 7 dargestellt. Vor oder spätestens unmittelbar nach dem Berechnen der Betriebskennlinie BE2 wird die Betriebskennlinie BE1 vorzugsweise gelöscht, um Speicherplatz frei zu machen.

## Patentansprüche

1. Schleuderstreuer zum Verteilen von Streugut, mit
   einem Streugutbehälter (2) und mindestens einer Streuscheibe (3) mit Streuschaufeln (4); einem Antrieb (8, 9) zum rotierenden Antreiben der Streuscheibe (3);
   einem Drehmomentsensor (22) zum Messen des Drehmoments des Antriebs (8, 9);
   einer durch eine rechnergestützte Regeleinrichtung (27) regelbare Dosiervorrichtung (10), wobei die Regeleinrichtung (27) derart ausgebildet ist, dass ein Ist-Massenstrom mit einem vorgegebenen Soll-Massenstrom verglichen wird und wobei der Ist-Massenstrom durch eine Betriebskennlinie (BE1, BE2) dem gemessenen Drehmoment zugeordnet ist;
   einer Einstellvorrichtung zum Einstellen des Schleuderstreuers auf verschiedene Betriebszustände, wie beispielsweise auf die Fahrgeschwindigkeit, auf die Verteilerart, auf die Streuscheibenart, auf die Soll-Streugutmenge pro Fläche, auf die Arbeitsbreite, auf die Streugutart und auf die Rotationsgeschwindigkeit, wobei den Betriebszuständen jeweils ein oder mehrere Parameterwerte von Einstellparametern zugeordnet sind, und mit
   einem Rechner, in welchen die Parameterwerte eingebbar sind; wobei in dem Rechner (23) eine von den Einstellparametern abhängige Basiskennlinie (BA) für den Massenstrom hinterlegt ist,
   eine Eingabevorrichtung (24) zum Eingeben von Parameterwerten in den Rechner durch einen Benutzer vorgesehen ist, über die ein oder mehrere der zu dem jeweiligen Betriebszustand gehörenden Parameterwerte eingegeben werden,
   der Rechner (23) nach dem Eingeben der Parameterwerte aus der Basiskennlinie (BA) die Betriebskennlinie (BE1, BE2) berechnet, mit der der Ist-Massenstrom für das Regeln berechnet wird, **dadurch gekennzeichnet, dass** das Berechnen der Betriebskennlinie (BE1, BE2) erfolgt, indem die Basiskennlinie (BA) anhand einer hinterlegten Rechenvorschrift, in welche die Parameterwerte als Parameter eingehen, modifiziert wird und
   wobei die Rechenvorschrift nicht ausschließlich empirisch, sondern teilweise rechnerisch ermittelt ist.

2. Schleuderstreuer nach Anspruch 1, wobei die Betriebskennlinie (BE1, BE2) einen Zusammenhang zwischen dem gemessenen Drehmoment und dem Ist-Massenstrom in dem eingestellten Betriebszustand definiert.

3. Schleuderstreuer nach einem der Ansprüche 1 oder 2, wobei die Rechenvorschrift durch Zusammenfassen mehrerer empirisch bestimmter Rechenvorschriften zu einer einzigen Rechenvorschrift, beispielsweise durch anteilige Multiplikation, erhalten wird.

4. Schleuderstreuer nach einem der Ansprüche 1 bis 3, wobei die Rechenvorschrift eine stetige Funktion darstellt, sodass selbst für beliebig kleine Änderungen der Parameterwerte keine sprunghafte Änderung der Werte der Regelkurve auftritt.

5. Schleuderstreuer nach einem der Ansprüche 1 bis 4, wobei Einstellen des Schleuderstreuers auf verschiedene Betriebszustände Verstellen der Schaufellänge oder der Schaufelstellung, Verändern des Aufbringbereichs von Streugut auf die Streuscheibe, Verändern der Drehzahl, Einsetzen von anderem Streugut und/oder Austauschen einer oder mehrerer Streuscheiben (3) umfasst.

6. Verfahren zum Verteilen von Streugut, umfassend Einstellen eines Schleuderstreuers auf verschiedene Betriebszustände, wie beispielsweise auf die Fahrgeschwindigkeit, auf die Verteilerart, auf die Streuscheibenart, auf die Soll-Streugutmenge pro Fläche, auf die Arbeitsbreite, auf die Streugutart und auf die Rotationsgeschwindigkeit, wobei den Betriebszuständen jeweils ein oder mehrere Parameterwerte von Einstellparametern zugeordnet sind, rotierendes Antreiben mindestens einer Streuscheibe (3) mit Streuschaufeln (4) mittels eines Antriebs (8,9) und Messen des Drehmoments des Antriebs (8, 9); und

Regeln einer Dosiervorrichtung (10) mit einer rechnergestützten Regeleinrichtung (27), wobei zum Regeln ein Ist-Massenstrom mit einem vorgegebenen Soll-Massenstrom verglichen wird, wobei der Ist-Massenstrom durch eine Betriebskennlinie (BE1, BE2) dem gemessenen Drehmoment zugeordnet ist; wobei in einem Rechner (23) eine von den Einstellparametern abhängige Basiskennlinie (BA) für den Massenstrom hinterlegt ist, ein Benutzer einen oder mehrere der zu dem jeweiligen Betriebszustand gehörenden Parameterwerte in den Rechner (23) eingibt, der Rechner (23) nach dem Eingeben der Parameterwerte aus der Basiskennlinie (BA) die Betriebskennlinie (BE1, BE2) berechnet, mit der der Ist-Massenstrom für das Regeln berechnet wird, **dadurch gekennzeichnet, dass** das Berechnen der Betriebskennlinie (BE1, BE2) erfolgt, indem die Basiskennlinie (BA) anhand einer hinterlegten Rechenvorschrift, in welche die Parameterwerte als Parameter eingehen, modifiziert wird und wobei die Rechenvorschrift nicht ausschließlich empirisch, sondern teilweise rechnerisch ermittelt wird.

7. Verfahren nach Anspruch 6, wobei die Betriebskennlinie (BE1, BE2) nach Beenden des Betriebs der Streuscheibe (3) unmittelbar gelöscht oder so lange gespeichert und zur Berechnung des Ist-Massenstroms genutzt wird, bis neue Einstellparameter eingegeben werden und eine neue Betriebskennlinie (BE1, BE2) berechnet wird.

8. Verfahren nach Anspruch 6 oder 7, wobei die Rechenvorschrift durch Zusammenfassen mehrerer empirisch bestimmter Rechenvorschriften zu einer einzigen Rechenvorschrift, beispielsweise durch anteilige Multiplikation, erhalten wird

9. Verfahren nach einem der Ansprüche 6 bis 8, wobei die Rechenvorschrift eine stetige Funktion darstellt, sodass selbst für beliebig kleine Änderungen der eingegebenen Parameterwerte keine sprunghafte Änderung der Werte der Regelkurve auftritt.

10. Verfahren nach einem der Ansprüche 6 bis 9, wobei das Einstellen des Schleuderstreuers auf verschiedene Betriebszustände Verstellen der Schaufellänge oder der Schaufelstellung, Verändern des Aufbringbereichs von Streugut auf die Streuscheibe, Verändern der Drehzahl, Einsetzen von anderem Streugut und/oder Austauschen einer oder mehrerer Streuscheiben umfasst.

## Claims

1. Centrifugal spreader for distributing spreading material, having
a spreading material container (2) and at least one spreading disc (3) with spreading blades (4);
a drive (8, 9) for driving the spreading disc (3) in rotation;
a torque sensor (22) for measuring the torque of the drive (8, 9);
a metering device (10) which can be controlled by a computer-aided control device (27), wherein the control device (27) is embodied in such a way that an actual mass flow is compared with a predefined target mass flow, and wherein the actual mass flow is assigned to the measured torque by means of an operating characteristic curve (BE1, BE2);
a setting device for setting the centrifugal spreader to different operating states, such as, for example, to the velocity, to the type of distributor disc, to the type of spreading disc, to the target quantity of spreading material per unit surface area, to the working width, to the type of spreading material and to the rotational speed, wherein the operating states are each assigned one or more parameter values of setting parameters, and having
a computer in which the parameter values can be input;
wherein a base characteristic curve (BA), dependent on the setting parameters, for the mass flow is stored in the computer (23),
an input device (24) for the inputting of parameter values into the computer by a user is provided, by means of which input device (24) one or more of the parameter values which are associated with the respective operating state are input,
after the inputting of the parameter values from the base characteristic curve (BA) the computer (23) calculates the operating characteristic curve (BE1, BE2) with which the actual mass flow is calculated for the control,
**characterized in that** the operating characteristic curve (BE1, BE2) is calculated by modifying the base characteristic curve (BA) on the basis of a stored computing rule into which the parameter values are input as parameters, and wherein the computing rule is not determined empirically but rather partially by computation.

2. Centrifugal spreader according to Claim 1, wherein the operating characteristic curve (BE1, BE2) defines a relationship between the measured torque and the actual mass flow in the operating state which is set.

3. Centrifugal spreader according to one of Claims 1 or 2, wherein the computing rule is obtained by compiling a plurality of empirically determined computing rules to form a single computing rule, for example by proportional multiplication.

4. Centrifugal spreader according to one of Claims 1 to 3,
wherein the computing rule represents a continuous function, with the result that no sudden change in the values of the control curve occurs even for arbitrarily small changes in the parameter values.

5. Centrifugal spreader according to one of Claims 1 to 4,
wherein setting the centrifugal spreader to different operating states comprises adjusting the blade length or the blade position, changing the area at which spreading material is applied to the spreading disc, changing the rotational speed, using a different spreading material and/or replacing one or more spreading discs (3).

6. Method for distributing spreading material, comprising
setting a centrifugal spreader to different operating states such as, for example, to the velocity, to the type of distributor, to the type of spreading disc, to the target quantity of spreading material per unit surface area, to the working width, to the type of spreading material and to the rotational speed, wherein the operating states are each assigned one or more parameter values of setting parameters,
driving at least one spreading disc (3) with spreading blades (4) in rotation by means of a drive (8, 9), and measuring the torque of the drive (8, 9); and
controlling a metering device (10), with a computer-aided control device (27), wherein for the control an actual mass flow is compared with the predefined target mass flow, wherein the actual mass flow is assigned to the measured torque by means of an operating characteristic curve (BE1, BE2);
wherein a base characteristic curve (BA), dependent on the setting parameters, for the mass flow is stored in a computer (23), a user inputs one or more parameter values, associated with the respective operating state, into the computer (23),
after the inputting of the parameter values from the base characteristic curve (BA) the computer (23) calculates the operating characteristic curve (BE1, BE2) with which the actual mass flow for the control is calculated,
**characterized in that**
the operating characteristic curve (BE1, BE2) is calculated by modifying the base characteristic curve (BA) on the basis of a stored computing rule into which the parameter values are input as parameters, and
wherein the computing rule is not determined exclusively empirically but rather partially by computation.

7. Method according to Claim 6,
wherein the operating characteristic curve (BE1, BE2) is deleted immediately after the end of the operation of the spreading disc (3) or is stored, and used to calculate the calculate the actual mass flow, until new setting parameters are input and a new operating characteristic curve (BE1, BE2) is calculated.

8. Method according to Claim 6 or 7, wherein the computing rule is obtained by compiling a plurality of empirically determined computing rules to form a single computing rule, for example by proportional multiplication.

9. Method according to one of Claims 6 to 8 wherein the computing rule constitutes a continuous function, with the result that no sudden change occurs in the value of the control curve even for arbitrarily small changes in the parameter values which are input.

10. Method according to one of Claims 6 to 9, wherein the setting of the centrifugal spreader to different operating states comprises adjusting the blade length or the blade position, changing the area at which spreading material is applied to the spreading disc, changing the rotational speed, using a different spreading material and/or replacing one or more spreading discs.

**Revendications**

1. Epandeuse centrifuge destinée à épandre un produit d'épandage, présentant
un récipient (2) à produit d'épandage et au moins un disque d'épandage (3) doté d'aubes d'épandage (4),
un entraînement (8, 9) qui entraîne à rotation le disque d'épandage (3),
un capteur (22) de couple de rotation qui mesure le couple de rotation d'un entraînement (8, 9),
un ensemble de dosage (10) apte à être régulé par un dispositif de régulation (27) assisté par calculateur,
le dispositif de régulation (27) étant configuré de manière à comparer un écoulement massique effectif à un écoulement massique de consigne prédéterminé, l'écoulement massique effectif étant associé par une ligne caractéristique de fonctionnement (BE1, BE2) au couple de rotation qui a été mesuré,

un ensemble de réglage qui règle différents états de fonctionnement de l'épandeuse centrifuge, par exemple la vitesse d'avancement, le type de répartition, le type de disque d'épandage, la quantité de consigne de produit d'épandage par unité de surface, la largeur de travail, le type de produit d'épandage et la vitesse de rotation, une ou plusieurs valeurs de paramètres de réglage étant associées à chacun des états de fonctionnement et

un calculateur dans lequel les valeurs des paramètres peuvent être introduites,

une ligne caractéristique de base (BA) du débit massique, qui dépend des paramètres de réglage, étant conservée dans le calculateur (23),

un ensemble d'introduction (24) étant prévu pour permettre à un utilisateur d'introduire des valeurs de paramètres dans le calculateur et permettant d'introduire une ou plusieurs des valeurs de paramètres qui font partie de chaque état de fonctionnement,

le calculateur (23) calculant après l'introduction des valeurs de paramètres et à partir de la ligne caractéristique de base (BA) la ligne caractéristique de fonctionnement (BE1, BE2) avec laquelle le débit massique effectif est calculé pour la régulation, **caractérisée en ce que**

le calcul de la ligne caractéristique de fonctionnement (BE1, BE2) s'effectue en modifiant la ligne caractéristique de base (BA) à l'aide d'une prescription de calcul conservée en mémoire et dans laquelle les valeurs de paramètres interviennent comme paramètres et

**en ce que** la prescription de calcul n'est pas déterminée uniquement empiriquement mais en partie par calcul.

2. Epandeuse centrifuge selon la revendication 1, dans laquelle la ligne caractéristique de fonctionnement (BE1, BE2) définit une dépendance entre le couple de rotation mesuré et le débit massique effectif dans l'état de fonctionnement qui a été établi.

3. Epandeuse centrifuge selon l'une des revendications 1 ou 2, dans laquelle la prescription de calcul est obtenue en rassemblant plusieurs prescriptions de calcul définies empiriquement en une unique prescription de calcul, par exemple par multiplication fractionnelle.

4. Epandeuse centrifuge selon l'une des revendications 1 à 3, dans laquelle la prescription de calcul constitue une fonction constante de sorte que même pour de quelconques petites modifications des valeurs de paramètre, aucune modification brusque des valeurs de la courbe de régulation n'ait lieu.

5. Epandeuse centrifuge selon l'une des revendications 1 à 4, dans lequel le réglage de l'épandeuse centrifuge comporte l'ajustement à plusieurs états de fonctionnement différents de la longueur des aubes ou de la position des aubes, la modification de la zone d'application du produit d'épandage sur le disque d'épandage, la modification de la vitesse de rotation, l'utilisation d'un autre produit d'épandage et/ou le remplacement d'un ou plusieurs disques d'épandage (3).

6. Procédé de répartition de produit d'épandage, comprenant les étapes qui consistent à :

régler une épandeuse centrifuge en différents états de fonctionnement, par exemple la vitesse d'avancement, le type de répartition, le type de disque d'épandage, la quantité de consigne de produit d'épandage par unité de surface, la largeur de travail, le type de produit d'épandage et la vitesse de rotation, une ou plusieurs valeurs de paramètres de réglage étant associées à chacun des états de fonctionnement,

entraîner en rotation au moins un disque d'épandage (3) présentant des aubes d'épandage (4) au moyen d'un entraînement (8, 9) et mesurer le couple de rotation de l'entraînement (8, 9) et

réguler un ensemble de dosage (10) présentant un dispositif de régulation (27) assisté par calculateur, un écoulement massique d'effectif étant comparé à un écoulement massique de consigne prédéterminé en vue de la régulation, l'écoulement massique effectif étant associé par une ligne caractéristique de fonctionnement (BE1, BE2) au couple de rotation qui a été mesuré,

une ligne caractéristique de base (BA) de l'écoulement massique, qui dépend des paramètres de réglage, étant conservée dans le calculateur (23),

un utilisateur introduisant dans le calculateur (23) une ou plusieurs valeurs de paramètres qui appartiennent à l'état de fonctionnement particulier,

après introduction de valeurs de paramètres, le calculateur (23) calculant à partir de la ligne de base (BA) la ligne caractéristique de fonctionnement (BE1, BE2) avec laquelle l'écoulement massique effectif est calculé pour la régulation,

**caractérisé en ce que**

le calcul de la ligne caractéristique de fonctionnement (BE1, BE2) s'effectue en modifiant la ligne caractéristique de base (BA) à l'aide d'une prescription de calcul conservée en mémoire et dans laquelle les valeurs de paramètres interviennent comme paramètres et

**en ce que** la prescription de calcul n'est pas déterminée uniquement empiriquement mais en partie par calcul.

7. Procédé selon la revendication 6, dans lequel la ligne caractéristique de fonctionnement (BE1, BE2) est effacée immédiatement ou conservée jusqu'à la fin du fonctionnement disque d'épandage (3) et est utilisée pour le calcul de l'écoulement massique effectif jusqu'à ce de nouveaux paramètres de réglage soient introduits et qu'une nouvelle ligne caractéristique de fonctionnement (BE1, BE2) soit calculée.

8. Procédé selon les revendications 6 ou 7, dans lequel la prescription de calcul est obtenue en rassemblant plusieurs prescriptions de calcul définies empiriquement en une unique prescription de calcul, par exemple par multiplication fractionnelle.

9. Procédé selon l'une des revendications 6 à 8, dans lequel la prescription de calcul constitue une fonction constante de sorte que même pour de quelconques petites modifications des valeurs de paramètre, aucune modification brusque des valeurs de la courbe de régulation n'ait lieu.

10. Procédé selon l'une des revendications 6 à 9, dans lequel le réglage de l'épandeuse centrifuge comporte l'ajustement à plusieurs états de fonctionnement différents de la longueur des aubes ou de la position des aubes, la modification de la zone d'application du produit d'épandage sur le disque d'épandage, la modification de la vitesse de rotation, l'utilisation d'un autre produit d'épandage et/ou le remplacement d'un ou plusieurs disques d'épandage.

Fig. 1

Fig. 2

Fig. 3

Fig. 4

n

Fig. 5

r

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0963690 A

- DE 202012002455 U1